(19) Europäisches Patentamt
European Patent Office
Office européen des brevets

(11) **EP 1 835 299 A1**

(12) **EUROPÄISCHE PATENTANMELDUNG**

(43) Veröffentlichungstag:
**19.09.2007 Patentblatt 2007/38**

(51) Int Cl.:
***G01S 1/00*** *(2006.01)*

(21) Anmeldenummer: **07005385.5**

(22) Anmeldetag: **15.03.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **15.03.2006 DE 102006012797**

(71) Anmelder: **Deutsches Zentrum für Luft- und Raumfahrt e.V.**
**51147 Köln (DE)**

(72) Erfinder:
• **Engler, Evelin, Dr.**
**17235 Neustrelitz (DE)**
• **Noack, Thoralf**
**17235 Neustrelitz (DE)**
• **Klähn, Dietmar, Dr.**
**17235 Neustrelitz (DE)**
• **Schlüter, Stefan, Dr.**
**17235 Neustrelitz (DE)**

(74) Vertreter: **Brunotte, Joachim Wilhelm Eberhard**
**Patentanwälte Bressel und Partner**
**Radickestrasse 48**
**12489 Berlin (DE)**

(54) **Unterbrechungsdetektion bei einer Trägerphasen-Messung**

(57) Die Erfindung betrifft die Bestimmung einer Unterbrechung (Cycle Slip) einer Kontinuität bei einer Trägerphasen-Messung eines Signals, das von einem Satelliten eines globalen Satellitennavigationssystems gesendet wird. Ein von einem Empfänger empfangenes Signal wird wiederholt abgetastet, sodass eine zeitliche Folge von Messwerten der Trägerphase vorliegt. Die zeitliche Folge von Messwerten wird vervvendet, um ein mathematisches Modell der Trägerphase als Funktion der Zeit zu bilden (in Einrichtung 1). Ein statistisches Maß einer Abweichung des mathematischen Modells von der zeitlichen Folge von Messwerten wird ermittelt (in Einrichtung 1). Die zeitliche Folge wird unter Verwendung des mathematischen Modells zeitlich extrapoliert und eine erwartete Größe, die einen zeitlich extrapolierten Wert der Trägerphase aufweist, wird mit einer auf einer Messung der Trägerphase basierenden Messgröße verglichen, wobei die Messgröße einen Messwert der Trägerphase zu einem Zeitpunkt der Extrapolation und optional weitere Terme aufweist, wobei der Zeitpunkt der Extrapolation der Zeitpunkt ist, an dem der zeitlich extrapolierte Wert ermittelt wird bzw. wurde (Einrichtung 2). Unter Berücksichtigung des statistischen Maßes wird entschieden, ob eine Abweichung der erwarteten Größe von der Messgröße als eine Unterbrechung einer Kontinuität der Trägerphasen-Messung zu werten ist (in Einrichtung 2).

Fig.1

**EP 1 835 299 A1**

## Beschreibung

Die Erfindung betrifft ein Verfahren zur Bestimmung einer Unterbrechung (Cycle Slip) einer Kontinuität bei einer Trägerphasen-Messung eines Signals, das von einem Satelliten eines globalen Satellitennavigationssystems gesendet wird. Die Erfindung betrifft ferner eine Auswertungseinrichtung zum Auswerten eines solchen Signals.

Bei der Bestimmung einer globalen Position empfängt der Empfänger eines globalen Satellitennavigationssystems (GNSS) Signale von mehreren Satelliten. Die Signale werden jeweils unter Verwendung einer festen Trägerfrequenz einer elektromagnetischen Welle gesendet. Die Signale tragen die Information einer Codesequenz, die jeweils für den Satelliten charakteristisch ist. Durch Auswertung der Codesequenz kann die Entfernung des Empfängers zu dem Satelliten bestimmt werden. Um die Bestimmung zu verbessern, ist es üblich, außerdem die Phasenlage (im Folgenden kurz: Trägerphase) der Trägerfrequenz des Signals zu bestimmen. Dabei wird angestrebt, die Trägerphase quasi-kontinuierlich zu bestimmen, damit außer der Phasenlage innerhalb eines Schwingungszyklus der Trägerfrequenz auch die Gesamtanzahl der bereits vergangenen ganzen Schwingungszyklen seit Beginn der Messung oder seit Beginn eines Referenzzeitpunktes bekannt ist.

In der Praxis treten jedoch Unterbrechungen und/oder Unstetigkeiten bei der kontinuierlichen bzw. quasi-kontinuierlichen Phasenmessung auf. In diesem Fall kann der Empfänger das Signal nicht mehr kontinuierlich auswerten und es kommt zu einem Sprung in der Anzahl von Schwingungszyklen. Eine Unstetigkeit wird daher als Cycle Slip bezeichnet. Die Ursachen für Phasenunstetigkeiten sind unterschiedlicher Natur. Dazu zählen insbesondere Mehrwegeeffekte (d.h. die Ausbreitung des Signals parallel über mehrere unterschiedlich lange Wege) und andere Signalausbreitungsstörungen, wie Interferenzen und Störungen in der Atmosphäre (sowohl ionosphärische als auch troposphärische Störungen). Auch Abschattungen, z.B. durch Bäume, haben häufig Signalunterbrechungen zur Folge.

Wegen der negativen Auswirkungen auf die Genauigkeit der Positionsbestimmung durch den Empfänger Ist man bestrebt, Cycle Slips einerseits zu detektieren und andererseits nach Möglichkeit zu korrigieren. Häufig wird jedoch bereits das Ziel der zuverlässigen Detektion von Cycle Slips nicht erreicht. Unerkannte Cycle Slips haben zur Folge, dass ein Fehler bei der Messung der Entfernung zu dem Satelliten und bei GNSS damit auch bei der Positionsbestimmung entsteht.

Bekannten Verfahren, die eine Detektion der Cycle Slips und eine Korrektur vornehmen, ist gemeinsam, dass weitere Messgrößen zur Entscheidungsfindung herangezogen werden.

Im Fall von GPS Einfrequenzmessungen wird eine Kombination aus Code- und Trägerphasenmessungen (so genanntes Carrier Smoothing) gebildet, deren Differenz sich aus dem doppelten Ionosphärenfehler, dem mehrwegebedingten Ausbreitungsfehler und dem Mehrdeutigkeitsanteil zusammensetzt. Der Mehrwegefehler ist die dominante Größe, die im Bereich von mehreren 10 Metern variiert. Die Folge ist, dass kleinskalige Änderungen der Mehrdeutigkeit nicht erkannt werden können.

Eine weitere Möglichkeit bei Einfrequenzmessungen ist die Mitnutzung der bestimmten Position und Dynamik des Empfängers (z.B. DE 44 25 369 A1). Optionen dafür sind die Eigenbestimmung der Empfängerposition und Dynamik oder die Nutzung weiterer Sensoren z.B. Trägheitssysteme. Im ersten Fall werden die Codephasenmessungen und u.U. die Trägerphasenmessungen der parallel getrackten Satellit genutzt, um das Navigationsgleichungssystem zu lösen, d.h. um die Position des Empfängers zu bestimmen. Eine zeitliche Folge von Positionslösungen ermöglicht dann die Dynamik des Empfängers abzuschätzen und daraus auch Geschwindigkeitsvektoren für Vergleichszwecke zu prognostizieren. Alternativ kann der Einsatz eines zweiten Sensors (z.B. Trägheitssysteme, Odometer, ...) dazu dienen, die Empfängerposition und -Dynamik zu ermitteln. Jeder Sensor hat ein eigenes Fehlerbudget, das letztendlich die Genauigkeit und Zuverlässigkeit der Cycle Slip Detektion mitbestimmt.

Bei GPS Zwelfrequenzverfahren steigt die Kombinationsmöglichkeit durch Nutzbarkeit der Code- und Trägerphasenmessungen auf L1 und L2 auf vier. Das am weitesten fortgeschrittene Verfahren ist das von Blewitt, bei dem eine ionosphärenfreie Kombination aller vier Größen gebildet wird. Diese Methode führt zu zuverlässigen Entscheidungen, wenn der durch Mehrwegeausbreitung verursachte Fehler unter 20 cm liegt.

Im geodätischen Bereich gibt es weitere Verfahren, bei denen die Daten mehrerer Empfänger gemeinsam verarbeitet werden.

Bei Zweifrequenzverfahren basieren existierende Verfahren zur Detektion und Korrektur von Cycle Slips auf der Verwendung von Linearkombinationen von Größen, die aus zwei verschiedenen Signalen desselben Satelliten ermittelt werden, wobei die zwei verschiedenen Signale jeweils eine voneinander verschiedene Trägerfrequenz nutzen.

Manche existierende Verfahren beziehen darüber hinaus auch die Ergebnisse von Codephasenmessungen mit ein. Es werden Zeitreihen der abgeleiteten Größen gebildet und anhand von Diskontinuitäten im Zeitverlauf der Zeitreihe auf das Vorhandensein von Cycle Slips geschlossen.

Es ist eine Aufgabe der vorliegenden Erfindung, ein Verfahren zur Erkennung von Cycle Slips anzugeben, das die Erkennung in kurzer Zeit bzw. mit geringem Rechenaufwand erlaubt. Außerdem soll die Erkennung zuverlässig sein.

Ein der Erfindung zugrunde liegender Gedanke beruht auf der Erkenntnis, dass bereits die Auswertung der Phasenlage einer einzigen Trägerfrequenz ausreichende Informationen darüber bietet, ob ein Cycle Slip vorliegt. Die Erfindung geht davon aus, dass die Erkennbarkeit von Diskontinuitäten bei der Beobachtung von Messgrößen wesentlich durch die in den Einzelmessungen der Messgrößen enthalten Rausch- und Fehlergrößen bestimmt wird. Werden (wie bei den erwähnten existierenden Verfahren der Fall) Linearkombinationen mehrerer Messgrößen gebildet, verschlechtert sich die Erkennbarkeit. Daher kann die Auswertung gerade deshalb zuverlässiger ausgeführt werden, weil bei der Entscheidung darüber, ob ein Cycle Slip vorliegt, nicht außerdem auch Messwerte einer anderen Trägerfrequenz und/oder von Codephasen berücksichtigt werden. Derartige andere Größen sind nämlich in der Praxis rauschbehaftet und in der Regel nicht vollständig mit der zu beobachtenden Trägerphase korreliert. Unkorreliertes Rauschen erhöht aber das Konfidenzintervall, d.h. das Intervall, innerhalb dessen eine Abweichung zwischen einer aus einer Messung abgeleiteten Größe einerseits und einer Vergleichsgröße andererseits nicht als Cycle Slip erkannt werden kann, well die Schwankungen innerhalb des Konfidenzintervalls allein auf Rauschen zurückgeführt werden können.

Ein wesentlicher Gedanke der Erfindung ist daher, für eine vorhandene zeitliche Folge von Messwerten der Trägerphase ein Maß für stochastische Schwankungen anzugeben und dieses statistische Maß bei der Entscheidung darüber, ob ein Cycle Slip vorliegt, zu berücksichtigen. Sind die stochastischen Schwankungen geringer, kann das Konfidenzintervall kleiner gewählt werden und umgekehrt. Vorzugsweise erfolgt die Anpassung des Konfidenzintervalls automatisch, indem das statistische Maß als Term in die Berechnung einer Entscheidungsgröße eingeht, die bei der Entscheidung über das Vorliegen eines Cycle Slips verwendet wird. Dadurch wird es möglich, die Abtastung der Satellitensignale zum Zwecke der Ermittlung der Phasenwerte mit hoher Abtastfrequenz (z.B. Abtastfrequenz > 20 Hz, vorzugsweise 50 Hz) vorzunehmen. Auch können Signale mit hohen Phasenfluktuationen noch sinnvoll ausgewertet werden.

Insbesondere wird vorgeschlagen; Ein Verfahren zur Bestimmung einer Unterbrechung (Cycle Slip) einer Kontinuität bei einer Trägerphasen-Messung eines Signals, das von einem Satelliten eines globalen Satellitennavigatlonssystems gesendet wird, wobei das Verfahren folgende Schritte aufweist:

a) das Signal wird von einem Empfänger empfangen,

b) das empfangene Signal wird wiederholt abgetastet, sodass eine zeitliche Folge von Messwerten der Trägerphase vorliegt,

c) die zeitliche Folge von Messwerten wird verwendet, um ein mathematisches Modell der Trägerphase als Funktion der Zelt zu bilden,

d) ein statistisches Maß einer Abweichung des mathematischen Modells von der zeitlichen Folge von Messwerten wird ermittelt,

e) die zeitliche Folge wird unter Verwendung des mathematischen Modells zeitlich extrapoliert und eine erwartete Größe, die einen zeitlich extrapolierten Wert der Trägerphase aufweist, wird mit einer auf einer Messung der Trägerphase basierenden Messgröße (Insbesondere durch Differenzbildung) verglichen, wobei die Messgröße einen Messwert der Trägerphase zu einem Zeitpunkt der Extrapolation und optional weitere Terme aufweist, wobei der Zeitpunkt der Extrapolation der Zeitpunkt ist, an dem der zeitlich extrapolierte Wert ermittelt wird bzw. wurde, und

f) unter Berücksichtigung des statistischen Maßes wird entschieden, ob eine Abweichung der erwarteten Größe von der Messgröße als eine Unterbrechung einer Kontinuität der Trägerphasen-Messung zu werten ist.

Bei dem mathematischen Modell kann es sich um jegliche Art von mathematischer Beschreibung des Verlaufs der Trägerphase handeln, z.B. um eine Polynomapproximation der Trägerphase selbst und/oder zumindest einer ihrer Ableitungen nach der Zeit. Es können jedoch auch physikalisch begründete Größen, wie beispielsweise die bekannte Grundfrequenz des jeweiligen Trägersignals, in die Modellierung mit eingehen.

Das statistische Maß ist hier als die Abweichung des mathematischen Modells von der zeitlichen Folge von Messwerten definiert. Z.B. kann als statistisches Maß eine Standardabweichung ermittelt werden.

Wie in Schritt e) definiert, kann das mathematische Modell außer zur Berechnung des statistischen Maßes auch zur zeitlichen Extrapolation zumindest eines Wertes der Trägerphase genutzt werden. Dies ermöglicht es, auf einfache Weise und ohne erheblichen zusätzlichen Rechenaufwand einen erwarteten Wert der Trägerphase zu ermitteln. Wenn hier von einem erwarteten Wert der Trägerphase die Rede ist, so ist darunter auch ein abgeleiteter Wert zu verstehen, der den extrapolierten Wert und weitere Terme enthält. Auf ein Beispiel wird noch näher eingegangen.

Der erwartete Wert kann nun mit einem auf einer weiteren Messung der Trägerphase bzw. auf einer Abtastung des empfangenen Signals beruhenden Messgröße verglichen werden. Unter einem Vergleich ist insbesondere die Bildung einer rechnerischen Differenz zu verstehen, wobei die Differenz nicht separat als Ergebnis ausgegeben werden muss. Vielmehr kann die Differenz oder andere Art des Vergleichs unmittelbar in die Bewertungsgröße eingehen, die bewertet wird, um zu entscheiden, ob ein Cycle Slip vorliegt oder nicht.

Vorzugsweise ist der bei dem Vergleich verwendete Messwert nicht Element der zeitlichen Folge von Messwerten, die für die Berechnung des statistischen Maßes herangezogen wird. Daher handelt es sich bei dem statistischen Maß um eine von dem Messwert unabhängige Größe. Allerdings wird bevorzugt, dass das Verfahren im weiteren zeitlichen Verlauf wiederholt angewendet wird und der derzeit aktuelle Messwert zu diesem Zweck in die zeitliche Folge von Messwerten aufgenommen wird. Es kann jedoch Gründe geben, einen bestimmten Messwert nicht mit aufzunehmen oder erst nach einer Korrektur aufzunehmen. Nicht aufgenommen wird der Messwert vorzugsweise dann, wenn er auf einen Cycle SIIp folgt und auch eine Korrektur des Cycle Slips nicht möglich ist oder nicht gewünscht wurde.

Wenn eine Korrektur möglich ist, so wird sie in der Regel dadurch bewirkt, dass die Phase um die Anzahl von Zyklen der Trägerfrequenz korrigiert wird, die dem Cycle Slip entspricht. Dabei kann es sich um eine Korrektur um Bruchteile eines ganzen Schwingungszyklus, aber auch um eine Korrektur um ganze Schwingungszyklen handeln.

Die Formulierung "aktuell" schließt auch den Fall mit ein, dass die Abtastung des Satellitensignals in einem vergangenen Zeitraum vorgenommen wurde oder das Satellitensignal in anderer Weise aufgezeichnet wurde, so dass nachträglich eine Abtastung möglich ist. Unter "aktuell" ist daher jeweils der in der zeitlichen Relhenfolge letzte Wert zu verstehen, der für die Zwecke der Auswertung momentan betrachtet wird.

Vorzugsweise geht in die Entscheidung in Schritt f) außerdem eine Häufigkeit der Abtastung der Trägerphase bei der Ermittlung der Messwerte mit ein, insbesondere die Abtastfrequenz. Für die mathematische Beschreibung (Modellierung) der Trägerphase sollte eine statistisch relevante Anzahl von aufeinander folgenden Messwerten der Trägerphase verwendet werden, z. B. mindestens 50 Messwerte. Je höher die Abtastfrequenz ist, desto kürzer kann die (zeitliche) Länge des Datensegmentes sein, das zur Modellierung der Trägerphase und zum Ableiten der statistischen Eigenschaften genutzt wird. Je kürzer das Datensegment, desto geringer ist der Modelüerungsfehler, der sich dann vorwiegend aus höher frequenten Anteilen der Trägerphase ergibt.

Die Schritte c) bis f) können insbesondere durch digitale Datenverarbeitung, z.B. durch Software, ausgeführt werden. Zum Umfang der Erfindung gehören daher auch ein entsprechendes Computerprogramm, das diese Schritte ausführt, ein Datenträger, auf dem das Computerprogramm gespeichert ist, und ein Computer, in dem das Programm geladen ist, um die Verfahrensschritte auszuführen. Allgemeiner formuliert gehört daher zum Umfang der Erfindung auch:

Eine Auswertungseinrichtung zum Auswerten eines Signals, das von einem Satelliten eines globalen Satellitennavigationssystems gesendet wird, wobei die Auswertungseinrichtung eine Bestimmungseinrichtung aufweist, die ausgestaltet ist zu bestimmen, ob eine Unterbrechung (Cycle Slip) einer Kontinuität bei einer Trägerphasen-Messung des Signals vorliegt, wobei die Bestlmmungseinrichtung Folgendes aufweist:

a) eine Abtasteinrichtung, die ausgestaltet ist, ein empfangenes Signal wiederholt abzutasten, sodass eine zeitliche Folge von Messwerten der Trägerphase vorliegt,

b) eine Modellierungseinrichtung, die ausgestaltet ist, ein mathematisches Modell der zeitlichen Folge von Messwerten zu bilden,

c) eine Ermittlungseinrichtung, die ausgestaltet ist, ein statistisches Maß einer Abweichung des mathematischen Modells von der zeitlichen Folge von Messwerten zu ermitteln,

d) eine Extrapolations- und Vergleichseinrichtung, die ausgestaltet ist, die zeitliche Folge unter Verwendung des mathematischen Modells zeitlich zu extrapolieren und eine erwartete Größe, die einen zeitlich extrapolierten Wert der Trägerphase aufweist, mit einer auf einer Messung der Trägerphase basierenden Messgröße zu vergleichen, wobei die Messgröße einen Messwert der Trägerphase zu einem Zeitpunkt der Extrapolation und optional weitere Terme aufweist, wobei der Zeitpunkt der Extrapolation der Zeitpunkt ist, an dem der zeitlich extrapolierte Wert ermittelt wird bzw. wurde, und

e) eine Entscheidungseinrichtung, die ausgestaltet ist, unter Berücksichtigung des statistischen Maßes zu entscheiden, ob eine Abweichung der erwarteten Größe von der Messgröße als eine Unterbrechung einer Kontinuität der Trägerphasen-Messung zu werten ist.

Insbesondere ist aus Schritten b und c festzustellen, dass es sich bei dem mathematischen Modell der zeitlichen Folge von Messwerten um ein Modell einer einzigen Trägerphase handelt (siehe Schritt a). Die Ermittlung des statistischen Maßes der Abweichung und die Entscheidung beruhen daher auf Messwerten dieser Trägerphase. Weitere Messgrößen brauchen nicht berücksichtigt zu werden.

Es kann daher ein Verfahren zur Cycle Slip Detektion und Korrektur realisiert werden, bei dem jede Messgröße (im Sinne einer einzelnen Phasenmessung) autonom und adaptiv bewertet und korrigiert wird. Autonom bedeutet, dass Zusatzinformationen aus anderen Messgrößen, insbesondere aus Messungen anderer Phasen, für die Korrektur und Bewertung nicht mitgenutzt werden. Adaptiv bedeutet, dass für die Entscheidungsfindung die autonom geschätzte Phasenqualität der betrachteten Trägerphase mitgenutzt wird.

Die Auswertungseinrichtung kann beispielsweise Teil einer Empfangseinrichtung mit einem Empfänger zum Empfangen des Satellitensignals sein. Optional kann die Auswerteeinrichtung beispielsweise Bestandteil eines Empfängers aber auch Teil einer Empfangseinrichtung mit Empfänger und damit verbundener Datenverarbeitungseinrichtung sein. Der Empfänger wird beispielsweise durch einen handelsüblichen GPS-Empfänger realisiert, der in der Lage ist, die über eine Antenne empfangenen Satellitensignale zu empfangen und für die weitere Auswertung zur Verfügung zu stellen. Insbesondere kann das empfangene Signal von dem Empfänger oder einer nachgeschalteten Einrichtung digitalisiert werden. In der Praxis ist die Abtasteinrichtung häufig in den Empfänger integriert. Die von der Abtasteinrichtung durchgeführte Abtastung des Signals kann vor oder nach der Digitalisierung erfolgen.

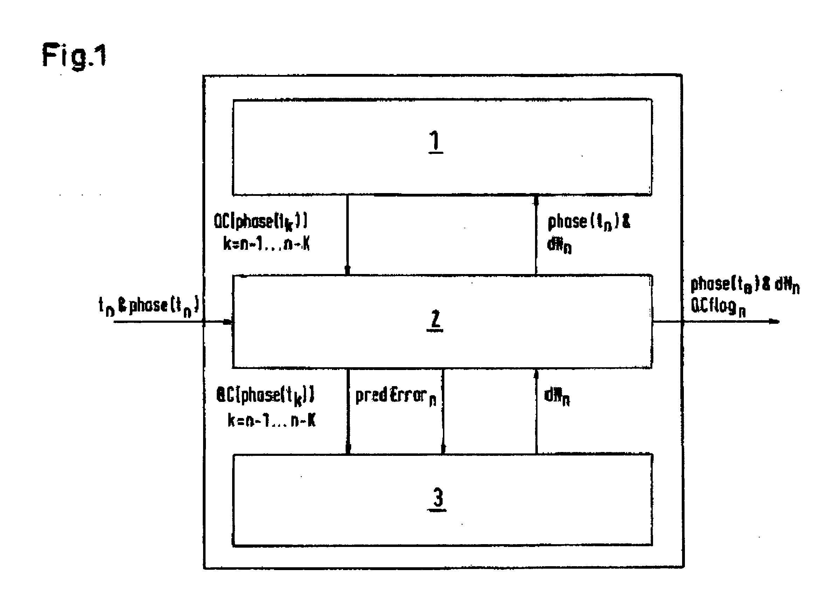

Ein Ausführungsbeispiel der vorliegenden Erfindung, das auch die bevorzugte Ausführungsform enthält, wird im Folgenden unter Bezugnahme auf die beigefügte Zeichnung beschrieben. Die einzige Figur der Zeichnung, die Fig. 1, zeigt:

eine Anordnung zum Auswerten eines Satellitensignals, wobei die Anordnung die Bestimmung einer Qualität des Signals, die Detektion von Cycle Slips und deren Korrektur ermöglicht.

Eine Phasenmessung wird in der Satellitennavigation zur Bestimmung der Entfernung und seiner Änderung genutzt. Bezogen auf ein Hächfrequenz-Signal s(t) als Funktion der Zeit t in der allgemeinen Form:

$$s(t) = A(t) \cdot cos\big[\omega \cdot t + \phi(t)\big]$$

werden durch Satellitennavigationsempfänger neben weiteren Messgrößen die Phase $\phi(t)$ ausgegeben. Derartige Verfahren und Signalempfänger sind im Fachgebiet allgemein bekannt und werden hier nicht näher beschrieben.

Der Messwert $\phi(t)$ kann entsprechend einem Messmodell als

$$\phi(t) = R_{geo}(t) + c \cdot \big[T_{sat}(t) - T_{rec}(t)\big] - d_{ION}(t) + d_{tro}(t) + \lambda \cdot N(t) + \varepsilon(t)$$

als Summe der im Folgenden erläuterten Größen ausgedrückt werden:

- $R_{geo}(t)$: geometrischer Range
- $T_{sat}(t)$: Satellitenuhrenfehler
- $T_{rec}(t)$: Empfängeruhrenfehler
- $d_{ION}(t)$: Ionosphärisch bedingter Laufzeitfehler
- $d_{tro}(t)$: Troposphärisch bedingter Laufzeitfehler
- $\lambda \cdot N(t)$ : N(t) beschreibt das Vielfache einer Wellenlänge $\lambda$, die den Offset zwischen geometrischem Range (wirklichen Abstand Satellit und Empfänger) und der durch die Phasenmessung beschriebene Relativdistanz beschreibt
- $\varepsilon(t)$: Restfehler, der bei idealer Modellierung der anderen Komponenten als Phasenrauschen zu interpretieren ist

In der Regel werden Phasen durch den Signal-Empfänger in gleichen Zeitabständen gemessen und bereitgestellt z.B. alle 1 Sekunde, wenn die unterstützte Abtastfrequenz 1 Hz ist.

Die Phase ist eine stetige Funktion der Zeit, außer wenn durch die Dynamik des Empfängers, durch Ausbreitungsfehler oder durch Fehlfunktionen des Empfängers die zeitliche Stetigkeit durch einen abrupten Wechsel der Mehrdeutigkeit N(t), auch Cycle Slip genannt, unterbrochen wird. Dieser Effekt kann auch als "Unterbrechung der Kontinuität" bezeichnet werden. Für die weitere Nutzung der Phasenmessung ist es erforderlich, diese Unstetigkeiten zu erkennen und zu korrigieren.

Bei der bevorzugten Ausführungsform des Verfahrens zur Erkennung und Korrektur von Cycle Slips werden ausschließlich die Messwerte einer einzigen Trägerphase phase($t_n$) und die zugeordnete Zeitreferenz $t_n$ genutzt. Die Indexvariable n ist dabei eine ganze Zahl, die genutzt wird, um die einzelnen Elemente der Folge der Phasenmesswerte eindeutig bezeichnen zu können. Z.B. hat ein bestimmtes Element der Folge den Indexwert n = 4. Das zeitlich unmittelbar darauf folgende Elemente (d.h. der nächste Abtastwert) hat dann den Indexwert n = 5. Die Zeitvariable t definiert den jeweiligen Zeitpunkt der Abtastung des empfangenen Satellitensignals.

Wesentliche Vorteile des Verfahrens sind:

- Es ist eine adaptive Bewertung (s.o.) des Einzelsignals (eine einzige Trägerphase kann autonom bewertet werden) ohne Verwendung von a-priori-Informationen möglich.
- Die Signalqualität des Einzelsignals (insbesondere das Messrauschen) wird bestimmt.
- Es werden Phasensprünge und Outlier auf Grundlage der Verwendung hochratiger, einzelner Phasenmessungen des Empfänger (z. B. im Bereich 1-50Hz) bestimmt.

Unter Nutzung statistischer Methoden werden folgende technischen Probleme überwunden:

- Vermeiden von Fehldetektionen von Cycle Slips bei Phasenmessungen unter ionosphärisch gestörten Bedingungen
- Bereitstellung von in Echtzeit gewonnenen statistischen Kenngrößen für die weitere Verarbeitung in Integritäts- und Positionieralgorithmen (z.B. Kaimari-Filter)
- Anwendbarkeit bei Einfrequenzmessungen durch Verzicht auf Zusatzinformationen (wie z.B. für Linearkombinationen notwendig)

Im Einzelnen werden folgende Vorteile erzielt:

- Eine Fehlerfortpflanzung anderer Messgrößen oder anderer Sensoren wird durch die autonome Bewertung einzelner Phasenmessungen (bei GPS L1-Trägerphase unabhängig von L2-Trägerphase) ausgeschlossen.
- Durch die unabhängige Bewertung der einzelnen Trägerphasenmessungen erfolgt keine Verfälschung der Messwerte - ihre Weiterverwendung insbesondere zur Lösung wissenschaftlich-technischer Fragestellung (Bestimmung ionosphärischer Laufzeitfehler und Szintillationen, Qualitätsbewertung von Phasenmessungen, Korrelationsanalysen von Ausbreitungsfehlers) ist damit uneingeschränkt möglich.
- Das Verfahren ist an die Signalcharakteristik adaptiert.
- Das Verfahren erlaubt nicht nur die Detektion der Cycle Slips sondern auch die Korrektur ohne Verwendung von Zusatzinformationen. Es ist damit auch unabhängig von der Verfügbarkeit von Zusatzinformationen.
- Das Verfahren ermöglicht die Lösung der Cycle Slip Detektion und Korrektur in Echtzeit. Echtzeit bedeutet hier, dass die Detektion und Korrektur eines eingehenden Phasenmesswertes abgeschlossen ist, bevor der nächste Messwert kommt. Bei einer Samplingfrequenz von 50 Hz also innerhalb von 0.02 s. Diese Eigenschaft ist essentiell für "Safety of Life" Anwendungen GNSS-basierter Ortung und Navigation, unabhängig von folgenden Prozessierungsschritten im spezifischen Anwendungsbezug. Dies könnten dann u.a. RTK-Verfahren, geodätische Netzwerkausgleichungen, Szintillations-monitoringssysteme sein.

Die autonome und adaptive Cycle Slip Detektion und Korrektur in Echtzeit ist auch unter schwierigen Ausbreitungsbedingungen (z.B. Ionosphäre, Mehrwegeausbreitung...) möglich.

Optional ist vorgesehen, dass in Abhängigkeit von der Anzahl der bereits vorhandenen Phasenmesswerte entweder im Akquisitionsmodus ($n \leq K$) oder im Prozessierungsmodus ($n > K$) gearbeitet wird. K bezeichnet den Konfigurationsparameter, der gleich der Anzahl von Messwerten ist, die zur Bildung einer Datenbasis von Phasenmesswerten erforderlich ist, um eine Phasenqualitätsbewertung auszuführen. Anders ausgedrückt wird im Akquisitionsmodus keine Bewertung der Phasenqualität durchgeführt und daher auch keine Detektionen von Cycle Slips, da die Anzahl der Messwerte K nicht übersteigt. Zu den Messwerten können im Prozessierungsmodus auch korrigierte Messwerte gezählt werden, die durch die im Folgenden beschriebene Detektion eines Cycle Slips und anschließende Korrektur erhalten werden.

Im Folgenden wird nun auf Fig. 1 Bezug genommen. Die in der Figur dargestellte Anordnung weist einen Phasenqualitätsschätzer 1 auf, der aus den eingegangen (der Eingang der Anordnung befindet sich links in der Figur) Phasenmesswerten phase($t_k$) mit k=n-1...n-K die zugeordneten Phasenraten $dpha_k$ als Funktion der Zeit berechnet

$$dpha_k = \frac{phase_k - phase_{k-1}}{t_k - t_{k-1}} \qquad \text{mit k=n-1...n-K+1.}$$

Dabei ist k wiederum eine ganzzahlige Indexvariable. Die für die Datenbasis $dpha_k = f(t_k)$ gültige Polynomapproximation ("est" bezeichnet dabei "geschätzt" oder englisch: "estimated")

$$est[dpha_k] = \sum_{m=0}^{M} coff_m \Big|_{polynomial_{n-1}} \cdot (t_k)^m$$

wird unter Verwendung der Methode des kleinsten quadratischen Fehlers abgeleitet, wobei die Polynomkoeffizienten $coff_m$ den funktionalen Zusammenhang zwischen der Zeit und der approximierten Phasenrate $est(dpha_k)$ beschreiben. Die Ordnung des Polynoms M ist ein Konfigurationsparameter des Verfahrens, der in Abhängigkeit von der verwendeten Datenrate zu wählen ist. Werden die Messwerte der Trägerphase mit 50 Hz bereitgestellt (abgetastet), so sind K=50 ... 100 Messwerte zu Modellierung mit einem linearen Modell ausreichend. Liegen die Daten nur mit 1 Hz vor, ist eine Modellierung mit einem Polynom höherer Ordnung erforderlich. Die abgeleitete Standardabweichung

$$\sigma[\text{polynomial}_{n-1}] = \sqrt{\frac{1}{K-1} \sum_{i=n-1}^{n-K+1} (dpha_i - est[dpha_i])}$$

ist das statistische Maß zur Beschreibung der momentanen Phasenqualität und setzt sich aus dem Modellierungsfehler des Polynoms und dem Phasenrauschen in Bezug auf die aktuell verwendete Datenbasis zusammen. Die Polynomkoeffizienten und die Standardabweichung sind die das aktuelle Phasenverhalten beschreibenden Parameter QC[phase $(t_k)$].

Da folglich die vom Phasenqualitätsschätzer 1 abgeleiteten Parameter erst ab den Phasenmesswerten (n>K) zur Verfügung stehen, werden im Ausführungsbeispiel alle vorhergehenden Phasenmessungen n≤K als nicht bewertet (QCflag$_n$=0) gekennzeichnet. Eine Detektionseinrichtung, der Cycle Slip Detektor 2 (im Folgenden kurz: CSD 2) befindet sich dann im Akquisitionsmodus. Eine Detektion von Cycle Slips und folglich eine Bestimmung der Mehrdeutigkeitsänderung dNn (siehe unten) erfolgt noch nicht, demzufolge bleibt dNn auf seinem Initialwert, der 0 ist.

Im Prozessierungsmodus (n>K) bestimmt der CSD 2, der mit dem Phasenqualitätsschätzer 1 verbunden ist, auf der Grundlage des zuletzt bestimmten Polynoms den erwarteten Phasenmesswert durch Extrapolation

$$pred[dpha_n] = \sum_{m=0}^{M} coff_m \big|_{\text{polynomial})_{n-1}} \cdot (t_n)^m.$$

"pred" bezeichnet dabei "prädiziert" bzw. "vorausgesagt" oder englisch: "predicted". Anschließend bildet der CSD die Differenz zwischen Messwert und prädizierten Wert, bezogen auf die für die Phasenmessung gültige Wellenlänge $\lambda$:

$$predError = \frac{pred[dpha_n] - dpha_n}{\lambda}$$

Diese wellenlängenbezogene Differenz predError (englisch: "prediction error") wird folglich in cycles (Schwingungszyklen) berechnet. Unter Einbeziehung des Konfidenzintervalls, das hier gleich der oben angegebenen Standardabweichung $\sigma[\text{polynomial}_{n-1}]$ ist, wird die Prüfgröße "check" abgeleitet

$$check = \left[ |predError| - \frac{fac_{conf} \cdot \sigma[\text{polynomial}_{n-1}]}{\lambda} \right] \cdot \frac{predError}{|predError|}.$$

anhand derer entschieden wird, ob ein Cycle Slip auftrat oder nicht. Der Faktor $fac_{conf}$ ist dabei ein Wert, der die statistische Sicherheit des Tests in Abhängigkeit von der vorausgesetzten Verteilungsfunktion beschreibt. Im Fall einer Normalverteilung impliziert ein Wert $fac_{conf}$ =2 einen Wertebereich, in dem 95% aller erwarteten Werte liegen.. Allgemeiner formuliert ist $fac_{conf}$ ein Faktor, der optional vorgegeben werden kann und der den zulässigen Wertebereich des predError in Bezug auf Nichtauftreten von Cycle Slips bestimmt.

Eine zugeordnete Vergleichsgröße level kann definiert werden, um bei der Detektion von Cycle Slips die Abtastfrequenz fs und den Wellenlängenfaktor WLF zu berücksichtigten. Im Ausführungsbeispiel ist die Vergleichsgröße definiert als:

$$level = WLF \cdot f_s ,$$

wobei $f_s$ die Abtastfrequenz der Phasenmesswerte angibt und WLF den empfängerspezifischen Wellenlängenfaktor für bereitgestellte Phasenmessungen spezifiziert. Dieser bestimmt, ob die Trägerphase bzgl. ganzzahliger Wellenlängen oder halber Wellenlängen angegeben wird. Folglich leitet sich die statische Vergleichsgröße level im Ausführungsbeispiel aus den empfänger- und datenspezifischen Konfigurationsparametem WLF und $f_s$ ab. Im Fall ganzzahliger Wellenlängen ist WLF = 1, sodass level gleich der Abtastfrequenz $f_s$ ist.

Überschreitet die Prüfgröße check die Vergleichsgröße level, so wird entschieden, dass ein Cycle Slip vorliegt. Das dem derzeit betrachteten Phasenmesswert zugeordnete Qualitätsflag $QCflag_n$ wird dann auf 1 gesetzt. Liegt kein Cycle Slip vor (die Prüfgröße check ist kleiner oder gleich der Vergleichsgröße level), so wird $QCflag_n$ auf 2 gekennzeichnet. Die Größe $dN_n$ bleibt unverändert.

Wurde ein Cycle Slip detektiert, so tritt der Cycle Slip Korrektor 3 in Aktion, der mit dem CSD 2 verbunden ist. Der Korrektor 3 bildet die aufgetretene Mehrdeutigkeitsänderung (d. h. die ganzzahlige Korrektur der Anzahl ganzer Schwingungszyklen seit Beginn der Messung oder seit einem Referenzzeitpunkt) als Rundungswert des Quotienten aus der Prüfgröße check und der Vergleichsgröße level:

$$\Delta N = round\left(\frac{check}{level}\right)$$

Anhand der bestimmten Mehrdeutigkeitsänderung korrigiert der Korrektor 3 den aktuellen Phasenmesswert

$$corr\left[dpha_n\right] = dpha_n - \Delta N \cdot \lambda$$

und aktualisiert die für die Phasenmessung ab jetzt gültige Anzahl vergangener Schwingungen (die in der Literatur auch als Reiativkorrektur der Mehrdeutigkeit dN bezeichnet wird)

$$dN = dN - \Delta N .$$

Dabei bedeutet corr "korrigiert" und bezeichnet in obiger Gleichung somit den korrigierten Phasenmesswert mit Indexvariable n. Die ausgeführte Korrektur wird durch Setzen von $QCflag_n$ auf 3 gekennzeichnet.

In Abhängigkeit davon, ob ein Cycle Slip detektiert wurde oder nicht, wird der aktuelle Phasenwert $dpha_n$ oder der korrigierte Phasenwert $corr(dpha_n)$ für das Polynom (d. h. das mathematische Modell)

$$coff_m\Big|_{polynomial_n}$$

sowie zur Neubestimmung der Standardabweichung im Phasenqualitätsschätzer 1 verwendet:

$$\sigma[polynomial_n] = \sqrt{\frac{1}{K-1}\sum_{i=n}^{n-K+2}(dpha_i - est[dpha_i])} .$$

Das Verfahren kann nun mit dem nächsten Wert in der zeitlichen Folge von Messwerten wiederholt werden (d. h. mit dem Wert, der den Index n - K + 3 hat).

Ein Vorteil des erfindungsgemäßen Verfahrens ist die Fähigkeit, auf real auftretende Datenlücken angemessen zu reagieren. Vereinzelt auftretende Datenlücken, d.h. Zeitpunkte, bei denen der Empfänger keine Phasenmesswerte bereitstellt, werden durch das mathematische Modell, das eine Funktion der Zeit ist, kompensiert. Der prädizierte (erwartete) Phasenwert ist folglich auch für spätere Zeitpunkte bestimmbar, z. B. in der oben beschriebenen besonders bevorzugten Ausführungsform gemäß der Gleichung:

$$\mathrm{pred}[\mathrm{dpha}_{n+2}] = \sum_{m=0}^{M} \mathrm{coff}_m\big|_{\mathrm{polynomial}_{n-1}} \cdot (t_{n+2})^m$$

Werden jedoch bei mehreren aufeinander folgenden Messzeitpunkten keine Phasenmesswerte durch den Empfänger bereitgestellt, so verlieren das Polynom $\mathrm{coff}_m\big|_{\mathrm{polynomiala-1}}$ und die zugeordnete Standardabweichung $\sigma[\mathrm{polynomial}_{n-1}]$ (bzw. aligemeiner formuliert das mathematische Modell und das statistische Maß für die Qualität der Modellierung und der Messdaten) zunehmend ihre Gültigkeit, d.h. es tritt eine Veralterung der das Phasenverhalten beschreibenden Parameter (im Ausführungsbeispiel: $QC[\mathrm{phase}(t_k)]$ auf. Eine Weiternutzung des mathematischen Modells zur Bewertung weiterer aktueller (z. B. neu eingehender) Phasenmesswerte würde zu einer Fehldetektion von Cycle Slips und durch die Korrektur zu einer Veränderung des realen Zeitverhaltens der Phase führen. Um dies auszuschließen, wird bevorzugt, dass die Zeitdifferenz zwischen dem aktuell betrachteten Messzeitpunkt $t_n$ und dem Zeitpunkt der letzten Aktualisierung des mathematischen Modells mit einem gültigen, nicht korrigierten Messwert nicht größer als ein vorgegebener Grenzwert sein darf. Dabei hängt der Grenzwert vorzugsweise von dem Konfigurationsparameter K und/oder von der Abtastrate ab. Bezogen auf das oben beschriebene bevorzugte Ausführungsbeispiel darf die Zeitdifferenz zwischen dem aktuellen Messzeitpunkt $t_n$ und dem Zeitpunkt $t_p$ der letzten Polynomaktualisierung

$$t_n - t_p \leq \mathrm{prob}_H \cdot \frac{K}{f_s}$$

nicht größer sein als ein bestimmter Anteil $\mathrm{prob}_H$ der spezifizierten Phasensegmentlänge ($K/f_a$) sein.

Damit wird gewährleistet, dass die das Phasenverhalten beschreibenden Parameter (im Beispiel: $QC[\mathrm{phase}(t_k)]$) überwiegend durch vorhergehende Phasenmesswerte bestimmt ist. Wird der Grenzwert überschritten, so wird ein Neustart des Verfahrens (und im Ausführungsbeispiel somit zunächst eine Akquisitionsphase) ausgelöst, um eine repräsentative Beschreibung des Phasenverhaltens zu erzielen.

Ein weiteres Phänomen, das vorzugsweise in Betracht gezogen wird, ist das sequentielle Auftreten von Cycle Slips, d. h. das Auftreten mehrerer Cycle Slips unmittelbar hintereinander. Dieser physikalisch atypische Fall kann als ein Indiz dafür eingestuft werden, dass die das Phasenverhalten beschreibenden Parameter, die zunehmend auf der Grundlage von korrigierten Phasenwerten erzeugt wurden, fehlerhaft sind. Durch das Hoch- bzw. Runterzählen der Anzahl von aufeinander folgenden Cycle Slips verfügt der CSD 2 in einer Variante des oben beschriebenen Ausführungsbeispiels über eine Kontrollgröße CYCLEcount,

**Tabelle 1: Generierung der Kontrollgröße CYCLEcount**

| CYCLEcount$_{n-1}$ | QCflag$_n$ | CYCLEcount$_n$ |
|---|---|---|
| =0 | $\varepsilon\{0,2\}$ | =0 |
| > 0 | =2 | CYCLEcount$_{n-1}$-1 |
| $\geq 0$ | $\varepsilon\{1,3\}$ | CYCLEcount$_{n-1}$+1 |

die dieses theoretisch denkbare Phänomen überwacht. Überschreitet CYCLEcount einen bestimmten Anteil $\mathrm{prob}_H$ der Anzahl K der für die Datenbasis spezifizierten Messwerte, so wird ebenfalls ein Neustart des Verfahrens (Akquisitionsphase) ausgelöst, um eine repräsentative Beschreibung des Phasenverhaltens zu erzielen.

Das Verfahren kann in Software implementiert werden, die entweder Bestandteil des Empfängers oder ein sich anschließenden numerischer Datenprozessor ist.. Die Konfiguration des Prozessors erfolgt mittels Parametersätzen, die in Abstimmung mit dem Empfängertyp und der Datenrate der Phasenmessungen bereitgestellt wurden. Die Verarbeitung erfolgt z. B. entsprechend der Beschreibung in der vorangegangenen Figurenbeschreibung, wobei der Prozessor eigenständig das beschriebene Verfahren realisiert. Der Prozessor wird pro eingehenden (bzw. für jeden neu betrachteten aktuellen) Phasenmesswert aufgerufen, wobei das aufrufende Programm für die Synchronisierung der Eingangs- und Ausgangsdaten verantwortlich ist, wenn die Phasen mehrerer Satelliten parallel verarbeitet werden sollen. Daraus folgt ganz allgemein, dass das Verfahren separat für verschiedene Satellitensignale, insbesondere Signale desselben Satelliten auf unterschiedlichen Trägerfrequenzen, ausgeführt werden kann.

Eine praktische Verifikation des Prozessors erfolgte durch die Erfinder anhand realer Phasenmessungen der durch die Anmelder in Tromsoe und Neustrelitz betriebenen Javad Empfänger (Abtastraten 50 Hz und 1 Hz) sowie anhand von Phasenmessungen, die durch den Empfänger des EGNOS Test Betts in Tromsoe (Abtastrate 1 Hz) bereitgestellt wurden.

Durch Einsatz dieses Verfahrens konnte nachgewiesen werden, dass die adaptive Anpassung des Entscheidungspegels bei 1 Hz Daten die Fehldetektion von Cycle Slips insbesondere an ionosphärisch gestörten Tagen (z. B. 31. Oktober 2003) erheblich reduziert. Der erreichbare Gewinn wird jedoch durch die Qualität der bereitgestellten Phasenmessungen mitbestimmt.

## Patentansprüche

1. Verfahren zur Bestimmung einer Unterbrechung (Cycle Slip) einer Kontinuität bei einer Trägerphasen-Messung eines Signals, das von einem Satelliten eines globalen Satellitennavigationssystems gesendet wird, wobei das Verfahren folgende Schritte aufweist:

   a) das Signal wird von einem Empfänger empfangen,
   b) das empfangene Signal wird wiederholt abgetastet, sodass eine zeitliche Folge von Messwerten der Trägerphase vorliegt,
   c) die zeitliche Folge von Messwerten wird verwendet, um ein mathematisches Modell der Trägerphase als Funktion der Zeit zu bilden,
   d) ein statistisches Maß einer Abweichung des mathematischen Modells von der zeitlichen Folge von Messwerten wird ermittelt,
   e) die zeitliche Folge wird unter Verwendung des mathematischen Modells zeitlich extrapoliert und eine erwartete Größe, die einen zeitlich extrapolierten Wert der Trägerphase aufweist, wird mit einer auf einer Messung der Trägerphase basierenden Messgröße (insbesondere durch Differenzbildung) verglichen, wobei die Messgröße einen Messwert der Trägerphase zu einem Zeitpunkt der Extrapolation und optional weitere Terme aufweist, wobei der Zeitpunkt der Extrapolation der Zeitpunkt ist, an dem der zeitlich extrapolierte Wert ermittelt wird bzw. wurde,
   f) unter Berücksichtigung des statistischen Maßes wird entschieden, ob eine Abweichung der erwarteten Größe von der Messgröße als eine Unterbrechung einer Kontinuität der Trägerphasen-Messung zu werten ist.

2. Verfahren nach dem vorhergehenden Anspruch, wobei in der Entscheidung in Schritt f) eine Häufigkeit der Abtastung der Trägerphase bei der Ermittlung der Messwerte berücksichtigt wird, insbesondere eine Abtastfrequenz berücksichtigt wird.

3. Verfahren nach einem der vorhergehenden Ansprüche, wobei ein Messwert der Trägerphase und/oder ein Term, der eine Anzahl von Schwingungszyklen des von dem Satelliten gesendeten Signals seit einem Referenzzeitpunkt angibt, korrigiert wird/werden, wenn in Schritt f) entschieden wird, dass eine Unterbrechung vorliegt.

4. Verfahren nach dem vorhergehenden Anspruch, wobei In eine Berechnung eines Korrekturwertes zur Durchführung der Korrektur die Abweichung der erwarteten Größe von der Messgröße, das statistische Maß für die Abweichung des mathematischen Modells und optional die Häufigkeit der Abtastung der Trägerphase eingehen.

5. Verfahren nach einem der vorhergehenden Ansprüche, wobei die Ausführung des Verfahrens wiederholt wird, sobald ein weiterer Messwert der Trägerphase zur Verfügung steht, der die zeitliche Folge von Messwerten fortsetzt.

6. Verfahren nach dem vorhergehenden Anspruch, wobei das mathematische Modell und/oder das statistische Maß für die Abweichung des mathematischen Modells aktualisiert werden, wenn in Schritt f) entschieden wurde, dass keine Unterbrechung vorliegt.

7. Verfahren nach einem der vorhergehenden Ansprüche, wobei bei der Entscheidung in Schritt f) lediglich Messwerte der Trägerphase einer einzigen Trägerfrequenz berücksichtigt werden.

**8.** Verfahren nach einem der vorhergehenden Ansprüche, wobei bei der Entscheidung in Schritt f) lediglich Messwerte der Trägerphase berücksichtigt werden, jedoch keine Ergebnisse einer Auswertung einer Codesequenz, die mit dem Signal des Satelliten empfangen wurde.

**9.** Verfahren nach einem der vorhergehenden Ansprüche, wobei als Voraussetzung für die Durchführung von Schritt f) geprüft wird, ob die Folge von Messwerten zumindest eine vordefinierte Mindestanzahl von Messwerten, einschließlich etwaiger korrigierter Messwerte, aufweist.

**10.** Verfahren nach dem vorhergehenden Anspruch, wobei als Voraussetzung für die Durchführung von Schritt f) geprüft wird, ob seit einer Aktualisierung des mathematischen Modells in Bezug auf aktuelle Messwerte der Trägerphase mehr Zeit vergangen ist als eine vordefinierte Zeitspanne.

**11.** Auswertungseinrichtung zum Auswerten eines Signals, das von einem Satelliten eines globalen Satellitennavigationssystems gesendet wird, wobei die Auswertungseinrichtung eine Bestimmungseinrichtung aufweist, die ausgestaltet ist zu bestimmen, ob eine Unterbrechung (Cycle Slip) einer Kontinuität bei einer Trägerphasen-Messung des Signals vorliegt, wobei die Bestimmungseinrichtung Folgendes aufweist:

a) eine Abtasteinrichtung, die ausgestaltet ist, ein empfangenes Signal wiederholt abzutasten, sodass eine zeitliche Folge von Messwerten der Trägerphase vorliegt,
b) eine Modellierungseinrichtung (1), die ausgestaltet ist, ein mathematisches Modell der zeitlichen Folge von Messwerten zu bilden,
c) eine Ermittlungseinrichtung (1), die ausgestaltet ist, ein statistisches Maß einer Abweichung des mathematischen Modells von der zeitlichen Folge von Messwerten zu ermitteln,
d) eine Extrapolations- und Vergleichseinrichtung (2), die ausgestaltet ist, die zeitliche Folge unter Verwendung des mathematischen Modells zeitlich zu extrapolieren und eine erwartete Größe, die einen zeitlich extrapolierten Wert der Trägerphase aufweist, mit einer auf einer Messung der Trägerphase basierenden Messgröße zu vergleichen, wobei die Messgröße einen Messwert der Trägerphase zu einem Zeitpunkt der Extrapolation und optional weitere Terme aufweist, wobei der Zeitpunkt der Extrapolation der Zeitpunkt ist, an dem der zeitlich extrapolierte Wert ermittelt wird bzw. wurde, und
e) eine Entscheidungseinrlchtung (2), die ausgestaltet ist, unter Berücksichtigung des statistischen Maßes zu entschieden, ob eine Abweichung der erwarteten Größe von der Messgröße als eine Unterbrechung einer Kontinuität der Trägerphasen-Messung zu werten ist.

**12.** Auswertungseinrichtung nach dem vorhergehenden Anspruch, mit einer Korrektureinrichtung (3), die ausgestaltet ist, einen Messwert der Trägerphase und/oder einen Term, der eine Anzahl von Schwingungszyklen des von dem Satelliten gesendeten Signals seit einem Referenzzeitpunkt angibt, zu korrigieren, wenn die Entscheidungseinrichtung (2) entschieden hat, eine Abweichung der erwarteten Größe von der Messgröße als eine Unterbrechung einer Kontinuität der Trägerphasen-Messung zu werten.

EP 1 835 299 A1

# Fig.1

```
          ┌─────────────────────────────┐
          │              1              │
          └─────────────────────────────┘
   QC[phase(t_k)]                  phase(t_n) &
   k=n-1...n-K                     dW_n
          ┌─────────────────────────────┐
t_n & phase(t_n) →│          2          │→ phase(t_B) & dW_n
          └─────────────────────────────┘   QCflag_n
   QC[phase(t_k)]   predError_n     dW_n
   k=n-1...n-K
          ┌─────────────────────────────┐
          │              3              │
          └─────────────────────────────┘
```

Input: $t_n$ & phase$(t_n)$

Output: phase$(t_B)$ & dW$_n$, QCflag$_n$

Block 1 → Block 2: QC[phase$(t_k)$], $k=n-1\ldots n-K$

Block 2 → Block 1: phase$(t_n)$ & dW$_n$

Block 2 → Block 3: QC[phase$(t_k)$], $k=n-1\ldots n-K$; predError$_n$

Block 3 → Block 2: dW$_n$

**Europäisches Patentamt**

**EUROPÄISCHER RECHERCHENBERICHT**

Nummer der Anmeldung

EP 07 00 5385

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SAUR E: "EIN KREUZKORRELATIONS-EMPFAENGER MIT MINIMIERTEN SYSTEMATISCHEN MESSFEHLERBEITRAEGEN FUER DIE GEODAETISCHE PUNKTBESTIMMUNG MIT DEM GLOBAL POSITIONING SYSTEM" INAUGURAL-DISSERTATION ZUR ERLANGUNG DES DOKTORGRADES DER HOHEN MATHEMATISCH-NATURWISSENSCHAFTLICHEN FAKULTAET DER RHEINISCHEN FRIEDRICH-WILHELMUS-UNIVERSITAET ZU BONN, XX, XX, 1989, Seiten 1-95, XP001061401 * Seite 4 * * Seite 6 - Seite 9 * * Seite 10 * * Seite 14 - Seite 15 * * Seite 34 - Seite 35 * * Seite 72 - Seite 79 * ----- | 1-12 | INV. G01S1/00 |
| Y | US 5 502 641 A (ISOMURA HIDETOSHI [JP]) 26. März 1996 (1996-03-26) * Zusammenfassung; Abbildungen 2-4 * * Spalte 7, Zeile 7 - Spalte 15, Zeile 23 * ----- | 1-12 | RECHERCHIERTE SACHGEBIETE (IPC) G01S |
| Y | US 6 268 824 B1 (ZHODZISHKY MARK ISAAKOVICH [RU] ET AL) 31. Juli 2001 (2001-07-31) * Zusammenfassung; Abbildungen 2-9 * ----- | 1-12 | |

Der vorliegende Recherchenbericht wurde für alle Patentansprüche erstellt

| Recherchenort | Abschlußdatum der Recherche | Prüfer |
|---|---|---|
| München | 3. Mai 2007 | Saur, Erich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**            EP 07 00 5385

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2007

| Im Recherchenbericht angeführtes Patentdokument | | Datum der Veröffentlichung | Mitglied(er) der Patentfamilie | | Datum der Veröffentlichung |
|---|---|---|---|---|---|
| US 5502641 | A | 26-03-1996 | CH<br>JP | 693653 A5<br>7190769 A | 28-11-2003<br>28-07-1995 |
| US 6268824 | B1 | 31-07-2001 | US | 2002021241 A1 | 21-02-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4425369 A1